# EUROPÄISCHE PATENTSCHRIFT

(11) **EP 2 268 562 B1**
(45) Veröffentlichungstag und Bekanntmachung des Hinweises auf die Patenterteilung: **29.05.2013**
(21) Anmeldenummer: 08874093.1
(22) Anmeldetag: 23.12.2008
(51) Int. Cl.: B65G 1/04

(54) **SHUTTLE-BAHNHOF UND SHUTTLE-KANALLAGER**
SHUTTLE STATION AND SHUTTLE CHANNEL STORAGE
STATION POUR NAVETTES ET DISPOSITIF DE STOCKAGE POUR NAVETTES

(30) Priorität: 30.04.2008 DE 102008022323
(43) Veröffentlichungstag der Anmeldung: 05.01.2011
(73) Patentinhaber: SSI Schäfer AG, 8213 Neunkirch (CH)
(72) Erfinder: REICHMUTH, Benno, CH-8212 Neuhausen (CH); FELBER, Bruno, CH-6285 Hitzkirch (CH)
(74) Vertreter: Witte, Weller & Partner
(86) Internationale Anmeldenummer: PCT/EP2008/011086
(87) Internationale Veröffentlichungsnummer: WO 2009/132687

(56) Entgegenhaltungen:
- DE-A1- 2 264 165
- DE-A1- 2 930 569
- DE-A1- 19 628 123
- GB-A- 2 094 770
- US-A- 3 746 189

## Beschreibung

Die vorliegende Erfindung betrifft ein Shuttle-Bahnhof nach Anspruch 1, der es erlaubt, regalgebundene Kanalfahrzeuge, so genannte Shuttle, sicher zwischen verschiedenen Kanälen des Kanallagers umzusetzen.

Ein herkömmliches Kanallager ist in der DE 38 40 648 A1 gezeigt. Ein Regelbediengerät für ein Kanallager ist in der US 3,800,963 gezeigt.

Shuttle-Kanallager gehören systematisch zu den so genannten Kompakt-Lagern bzw. Kanallagern. Ladungsträger, wie z.B. Paletten oder Tablare, werden auf Schienen stehend hintereinander in Kanälen gelagert. In einem Regalkanal stehen üblicherweise zwei oder mehr Lagereinheiten bestehend aus Ladungsträger(n) und Artikel hintereinander. In bzw. entlang der Regalschienen kann eine entsprechend flache Verfahreinheit (Shuttle) die Ladungsträger unterfahren und nach einem Anheben in Längsrichtung des Kanals transportieren, um so Einlagerungen und Auslagerungen vorzunehmen. Das Shuttle gelangt üblicherweise über ein Regalförderzeug (Regalbediengerät, Stapler, etc.) mit einer entsprechend angepassten Aufnahmevorrichtung in einen Kanal.

Das Verbringen der Shuttle in die Kanäle gestaltet sich schwierig. Anfänglich wurden Z-förmige Regalschienen verwendet, wobei die Ladungsträger im oberen horizontalen, nach außen kragenden Abschnitt abgestellt wurden und wobei Laufrollen der Shuttle auf einem unteren, zum Kanalinneren vorstehenden Abschnitt gelaufen sind. Um die Shuttle z.B. mit einem Stapler von der Regalfront aus in die Kanäle einheben zu können, musste der lichte Abstand zwischen den Regalschienen ausreichend groß gewählt werden, damit die Bedienperson des Staplers das Shuttle auch tatsächlich in den Kanal einfahren und absenken konnte. Dieser relativ große lichte Abstand zwischen den Schienen barg die Gefahr, dass das Shuttle verdreht relativ zu den Schienen in den Kanal eingehoben wird, so dass das Shuttle verkantet und schlimmstenfalls blockiert. Deshalb wurden im Stand der Technik auch C-förmige Laufschienen vorgeschlagen, die in Richtung der Kanalmitte geöffnet waren und geringe lichte Abstände relativ zueinander erlaubten. Am stirnseitigen Ende des Kanals hatten diese C-förmigen Schienen Ausnehmungen im oberen Bereich des C-Profils aufgewiesen, die ungefähr die Breite der Laufrollen hatten.

Das europäische Patent EP 1 554 198 schlägt alternativ eine Regalschiene vor, die eine horizontal orientierte Abstellfläche sowie eine horizontal orientierte Lauffläche aufweist, die über eine schräg verlaufende Seitenwand miteinander verbunden sind. Zwei sich gegenüberliegende derartige Laufschienen verjüngen sich von oben nach unten und bilden so eine trichterförmig ausgebildete Verfahrebene. Die trichterförmige Ausgestaltung erleichtert das Einheben des Shuttles von oben in den Kanal erheblich.

DE 2 264 165 beschreibt einen gattungsgemäßen Shuttle-Bahnhof.

Ein weiteres Problem, das sich im Zusammenhang mit Shuttle, insbesondere unabhängig agierenden Shuttle, ergibt, ist die Gefahr, dass ein Shuttle ein Kanalende überfährt und somit aus dem Kanal herunterfällt.

Des Weiteren sind Bedienpersonen im Lager gefährdet, wenn sie sich in Kanäle begeben, in denen automatisierte Shuttle arbeiten. Hier besteht eine erhebliche Verletzungsgefahr. Dieses Problem ist jedoch bei Shuttle geringer, die nicht autark betrieben werden. So sind im Stand der Technik Shuttlefahrzeuge bekannt, die zum Zwecke einer Steuerung und Energieversorgung permanent über ein Kabel mit einem Regalförderzeug verbunden sind.

Es ist daher eine Aufgabe der vorliegenden Erfindung, ein Shuttle-Bahnhof und ein Shuttle-Kanallager vorzusehen, wobei die oben genannten Nachteile überwunden werden. Insbesondere müssen im Lager arbeitende Bedienpersonen vor Verletzungen von automatisiert betriebenen Shuttles geschützt werden. Weiter ist es wünschenswert, dass die Shuttles einfach, sicher und zuverlässig zwischen verschiedenen Kanälen umgesetzt werden können.

Diese Aufgabe wird mit einem Shuttle-Bahnhof in einem Kanallagersystem gelöst, welches zumindest ein Regal mit einer Vielzahl von in einer Längsrichtung verlaufenden Kanälen aufweist, wobei der Bahnhof ein Gestell aufweist, welches durch ein Regalbediengerät oder ein Regelförderzeug derart in ein Ende eines Kanals einsetzbar ist, dass Schienenabschnitte des Gestells im Wesentlichen bündig an Regalschienen des Kanals koppeln, so dass das Shuttle in den Kanal ein- und ausfahren kann, um Ladungsträger anzuheben, umzusetzen und/oder abzusetzen, wobei das Gestell ferner so dimensioniert ist, dass das Shuttle während eines Umsetzens des Gestells von dem Ende des einen Kanals zu einem Ende eines anderen Kanals im Gestell verbleiben kann.

Anstatt das Shuttle, wie im Stand der Technik üblich, allein umzusetzen, wird gemäß der vorliegenden Erfindung ein Shuttle inklusive einem Shuttle-Bahnhof umgesetzt.

Das Shuttle befindet sich dabei im Bahnhof. Das Shuttle ist somit geschützt. Der Bahnhof ist so ausgebildet, dass Schienen, die im Bahnhof vorgesehen sind, vorzugsweise nahtlos an die Schienen im Regalkanal koppeln, wenn der Bahnhof in einen Übergabeplatz im Kanal eingesetzt ist. Das Umsetzen des Bahnhofs kann mit einer geringeren Sorgfalt als ein Umsetzen eines Shuttles allein geschehen. Stößt eine Bedienperson, z.B. beim Einsetzen des Bahnhofs in das Regal, an dem Regal an, bleibt das Shuttle unbeschädigt. Das Shuttle berührt das Regal nicht. Lediglich der Bahnhof berührt das Regal.

Ist der Bahnhof in den Kanal eingesetzt, so ist das für eine Bedienperson visuell erkennbar. Sobald ein Bahnhof in einen Kanal eingesetzt ist, weiß die Bedienperson, dass in diesem Kanal ein Shuttle arbeitet.

Gemäß einer bevorzugten Ausgestaltung erstrecken sich die Schienenabschnitte in der Längsrichtung und weisen zwischen sich einen lichten Abstand auf, der im Wesentlichen einem lichten Abstand zwischen den Regalschienen des Kanals entspricht.

Da die Breite des Shuttles dem Abstand der Regalschienen angepasst ist, sollte der Abstand zwischen den Schienenabschnitten diesem Abstand entsprechen, um so einen widerstandsarmen Übergang des Shuttles zwischen dem Bahnhof und dem Kanal zu ermöglichen. Das Shuttle kann über seitliche Abstandsrollen verfügen, die das Shuttle in dem Raum zwischen den Schienen halten. Bei identischem Schienenabstand kann sich das Shuttle beim Übergang nicht verkanten. Für die Führungsrollen erscheinen die Schienenabschnitte und die Regalschienen einstückig ausgebildet zu sein. Die Führungsrollen drehen in einer horizontalen Ebene, wohingegen die eigentlichen Laufrollen des Shuttles in einer vertikalen Ebene drehen.

Das Gestell weist erfindungsgemäß ferner eine Querzentriereinrichtung auf, die horizontal orientierte Abstellflächen aufweist und die sich von einer Kanaloberseite zu einer Kanalunterseite hin derart trichterförmig verjüngt, dass ein auf den Abstellflächen zu positionierender Ladungsträger beim Absenken auf den Bahnhof in Querrichtung des Kanals zentriert wird.

Ein Ladungsträger, der in den Kanal eingelagert werden soll, wird z.B. mittels eines Staplers in den Kanal eingehoben. Der Ladungsträger wird mittels einer Hubeinrichtung des Staplers in Richtung des Bahnhofs abgesenkt. Mit Hilfe der Zentriereinrichtung wird der Ladungsträger während des Absenkens in der Querrichtung des Kanals, also relativ zur Kanalmitte, zentriert, da sich der lichte Abstand der Elemente der Zentrierhilfe mit abnehmender Höhe verringert. Das Shuttle kann den so zentrierten Ladungsträger dann an seinen Lagerplatz im Kanal verbringen und muss sich nicht mehr um die Ausrichtung des Ladungsträgers in Kanalquerrichtung kümmern. Somit entfallen auch Sensoreinrichtungen und Manipulationseinrichtungen, um die Lage der Ladungsträger in Querrichtung zu bestimmen und zu beeinflussen.

Das Gestell weist erfindungsgemäß einen Endanschlag auf.

Der Endanschlag (Z-Richtung) verhindert, dass ein auf dem Gestell positionierter Ladungsträger aus dem Kanal gezogen werden kann. Der Endanschlag ist somit in einer Ebene angeordnet, die oberhalb der Fahrebene des Shuttles liegt. Der Endanschlag dient ferner dazu, ein unabsichtliches Herausziehen eines Ladungsträgers durch ein Lastaufnahmemittel eines Regalförderzeugs zu verhindern. Dies ist insbesondere beim Absetzen eines Ladungsträgers auf dem Bahnhof von Vorteil. Aber auch bei einer Fehlpositionierung eines Ladungsträgers im Bahnhof, der durch das Shuttle von einem Lagerplatz im Kanal abgeholt wird, wird verhindert, dass das Shuttle den Ladungsträger über den Bahnhof, d.h. über eine Regalfront, hinaus befördert.

Gemäß einer weiteren bevorzugten Ausgestaltung ist das Gestell an einer dem Kanalende abgewandten Seite mittels einer Anschlageinrichtung abgeschlossen, die vorzugsweise gegenüber einer Kanalbreite, vorzugsweise beidseitig, vorsteht.

Bei der Anschlageinrichtung kann es sich um ein Blech handeln, das das Gestell bzw. die Absetzeinrichtung an einem Ende in Querrichtung verbindet. Das Gestell weist dann in einer Draufsicht einen U-förmigen Querschnitt auf. Die Anschlageinrichtung verhindert, dass das Shuttle bei einer Fahrt aus dem Kanal in den Bahnhof über den Bahnhof hinaus fährt. Auf diese Weise wird verhindert, dass das Shuttle am Eingang des Kanals aus dem Regal fällt. In umgekehrter Richtung dient die Anschlageinrichtung als mechanischer Stopp, z.B. für einen Mast eines Staplers beim Einlagern eines Ladungsträgers. Insbesondere in großen Höhen ist ein Rangieren für Stapelfahrer schwierig. Beim Einlagern von Ladungsträgern kann es passieren, dass der Stapelfahrer mit dem Hubmast des Staplers gegen die Anschlageinrichtung des Bahnhofs fährt. Eine Beschädigung des im Bahnhof befindlichen Shuttles durch den Stapler ist ausgeschlossen.

Befindet sich der Bahnhof in einem Kanal, der in einer der unteren Ebenen des Regals angeordnet ist, verhindert bzw. erschwert die Anschlageinrichtung ferner den personellen Zutritt in den betroffenen Kanal. Die Anschlageinrichtung ist für Bedienpersonen somit bereits ein optisches Zeichen dafür, dass in einem Kanal mit einem, vorzugsweise automatisierten, Shuttle gearbeitet wird.

Die Anschlageinrichtung unterstützt ferner ein Umsetzen des Bahnhofs selbst. Insbesondere beim Einsetzen des Bahnhofs in einen Kanal dient die Anschlageinrichtung als mechanischer Stopp beim Einschieben des Bahnhofs in einen Übergabeplatz des Regals. Üblicherweise werden die Bahnhöfe mit dem gleichen Regalförderzeug wie die Ladungsträger selbst umgesetzt.

Dazu weist der Bahnhof vorzugsweise an seiner Unterseite eine Absetzeinrichtung bzw. Lastaufnahmekoppeleinrichtung auf. Die Absetzeinrichtung kann angepasst sein, um bei einem Umsetzen des Bahnhofs zwischen Kanälen mit einem Lastaufnahmemittel eines Regalförderzeugs derart zusammenzuwirken, dass der Bahnhof aus einem ersten Kanal angehoben und/oder herausgezogen und in einen zweiten Kanal abgesenkt und/oder hineingeschoben werden kann.

Die Absetzeinrichtung und das Lastaufnahmemittel sind aufeinander abgestimmt, so dass der Bahnhof wie ein Ladungsträger gehandhabt werden kann. Somit ist für ein Umsetzen des Bahnhofs kein gesondertes Regalbediengerät erforderlich, was in einer entsprechenden Investitionseinsparung resultiert.

In Übereinstimmung mit einer weiteren Ausgestaltung weist der Bahnhof einen Anschluss zum elektrischen Verbinden mit einem elektrifizierten Regalkanal oder einen austauschbaren Energiespeicher auf, um das Shuttle, wenn es sich im Bahnhof befindet, mit Energie, insbesondere mit einem Ladestrom für auf dem Shuttle bereitgestellte Akkumulatoren oder Superkondensatoren, zu versorgen.

Somit ist gewährleistet, dass sich das Shuttle bei entsprechender Ausstattung mit einem geeigneten Energiespeicher autonom im Kanal bewegen kann. Als Energiespeicher für das Shuttle kommen z.B. Superkondensatoren zum Einsatz. Der Bahnhof verfügt dann über einen weiteren Anschluss, um eine elektrische Verbindung zwischen dem Shuttle und dem Bahnhof herzustellen. Eine permanente Verbindung, z.B. mit einem Kabel, zwischen dem Shuttle und dem Bahnhof bzw. dem Regalförderzeug ist nicht erforderlich.

Insbesondere weist der Bahnhof eine in Längsrichtung wirkende Sensoreinrichtung auf.

Die Sensoreinrichtung ermöglicht eine Überwachung des Raums zwischen dem Shuttle und dem Bahnhof. Als Sensoreinrichtung kann z.B. eine Licht- oder Laserschranke eingesetzt werden, die einen Licht- bzw. Laserstrahl in Längsrichtung des Kanals erzeugt. Wird der Strahl z.B. durch eine (seitlich) in den Kanal eintretende Bedienperson unterbrochen, so kann dies sowohl auf Seiten des Shuttles als auch auf der Seite des Bahnhofs erfasst werden und zu einem Notaus führen. Diese Maßnahme erhöht zusätzlich die Sicherheit.

Gemäß einem weiteren Aspekt der vorliegenden Erfindung wird ein Regal für ein Kanallager vorgesehen, wobei das Regal eine Vielzahl von Kanälen zur Positionierung von einer Vielzahl von Ladungsträgern darin auf seitlich an Regalstehern angeordneten Regalschienen aufweist, wobei jeder Kanal einen Regalübergabeplatz aufweist, der derart ausgebildet ist, dass er einen Shuttle-Bahnhof so aufnehmen kann, dass die Regalschienen eines auf den Übergabeplatz folgenden Kanallagerplatzes im Wesentlichen bündig an Schienenabschnitte des Gestells ankoppeln, so dass ein Shuttle aus dem Bahnhof in den Kanal einfahren und in den Bahnhof zurückfahren kann.

Das Regal bzw. die Kanäle sind somit zur Aufnahme des oben beschriebenen Bahnhofs angepasst. Der Bahnhof kann in die Übergabeplätze eingehoben und/oder eingeschoben werden. Das Umsetzen des Bahnhofs zwischen verschiedenen Kanälen ist problemlos möglich.

Gemäß einem weiteren Aspekt wird ein Kanallager vorgesehen, das einen Shuttle-Bahnhof der oben beschriebenen Art sowie ein Regal der oben beschriebenen Art umfasst.

Gemäß einem noch weiteren Aspekt wird ein Verfahren zum Bereitstellen eines Shuttles in verschiedenen Kanälen eines Lagers vorgesehen, wobei das Verfahren die folgenden Schritte aufweist: Verfahren eines Shuttles in einen Shuttle-Bahnhof; Abkoppeln des mit dem Shuttle bestückten Bahnhofs von einem Übergabeplatz eines ersten Kanals eines Regals, vorzugsweise durch Ausheben und/oder Herausziehen des Bahnhofs mittels eines Regalbediengeräts oder mittels eines Staplers; und Umsetzen des mit dem Shuttle bestückten Bahnhofs mittels dem Regalbediengerät oder mittels dem Stapler in einen Übergabeplatz eines anderen Kanals.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Ansicht eines Shuttle-Kanallagers gemäß der vorliegenden Erfindung;
- Fig. 2a und 2b: perspektivische Ansichten eines Shuttle-Bahnhofs in Übereinstimmung mit der vorliegenden Erfindung;
- Fig. 3: eine perspektivische Ansicht eines Übergabeplatzes in einem Regal gemäß der vorliegenden Erfindung;
- Fig. 4: den Übergabeplatz der Fig. 3, wobei der Bahnhof der Fig. 2 im Regal der Fig. 3 positioniert ist;
- Fig. 5: eine perspektivische Ansicht auf das Regal der Fig. 4 aus einem anderen Winkel;
- Fig. 6a und 6b: Abwandlungen des Regals und des Bahnhofs in Übereinstimmung mit der vorliegenden Erfindung;
- Fig. 7: ein Flussdiagramm des Verfahrens;
- Fig. 8: eine perspektivische Draufsicht auf eine weitere Ausgestaltung eines erfindungsgemäßen Shuttle-Bahnhofs;
- Fig. 9: eine perspektivische Untersicht auf den Bahnhof der Fig. 8, wobei zusätzlich ein Shuttle dargestellt ist;
- Fig. 10: einen Übergabeplatz in einem Regal, der zur Aufnahme des Bahnhofs der Fig. 8 und 9 geeignet ist; und
- Fig. 11: den Übergabeplatz der Fig. 10, wobei der Bahnhof der Fig. 8 und 9 in den Übergabeplatz bzw. das Regal eingehoben ist.

In der nachfolgenden detaillierten Beschreibung der Erfindung werden ähnliche Elemente mit ähnlichen Bezugsziffern bezeichnet. Haben Elemente gegenüber der vorherigen Beschreibung eine Abwandlung erfahren, so wird dies explizit erwähnt werden.

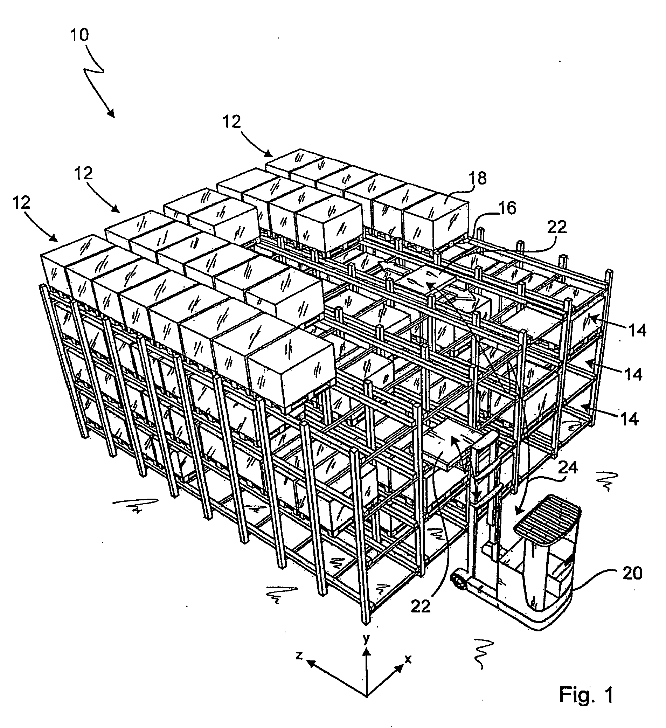

Fig. 1 zeigt eine schematisierte perspektivische Ansicht eines Shuttle-Kanallagers 10 gemäß der vorliegenden Erfindung.

Das Kanallager 10 weist einen Block aus nebeneinander angeordneten Regalen 12 auf. Eine Regalfront spannt sich in einer XY-Ebene auf. Eine Regaltiefe verläuft in einer Z-Richtung. Jedes der Regale 12 weist hier exemplarisch vier übereinander angeordnete Regalkanäle 14 auf. Mehr oder weniger Kanäle und Regale können vorgesehen werden. Die Kanäle 14 dienen zur Lagerung von Ladungsträgern 16, wie z.B. Paletten, Tablaren, etc., die wiederum mit Artikeln 18 bestückt sind. Nachfolgend werden exemplarisch Paletten als Ladungsträger verwendet. Die mit Artikeln 18 bestückten Paletten 16 werden mittels eines Regalförderzeugs 20 in die Kanäle 14 eingelagert und ausgelagert. In Fig. 1 ist exemplarisch ein Stapler 20 gezeigt. Es versteht sich, dass in einem (vollautomatisierten) Lager die Versorgung der Regale 12 z.B. auch mit einem Regalbediengerät erfolgen kann. Das Regalbediengerät ist vorzugsweise schienengeführt und versorgt Regalfronten von gegenüberliegenden Regalblöcken, wobei in Fig. 1 nur ein einziger Block gezeigt ist, mit Paletten 16. Der Raum zwischen zwei Regalblöcken, in dem sich das bzw. die Regalbediengeräte bewegen, wird als Regalgasse bezeichnet, die sich üblicherweise in der X-Richtung erstreckt.

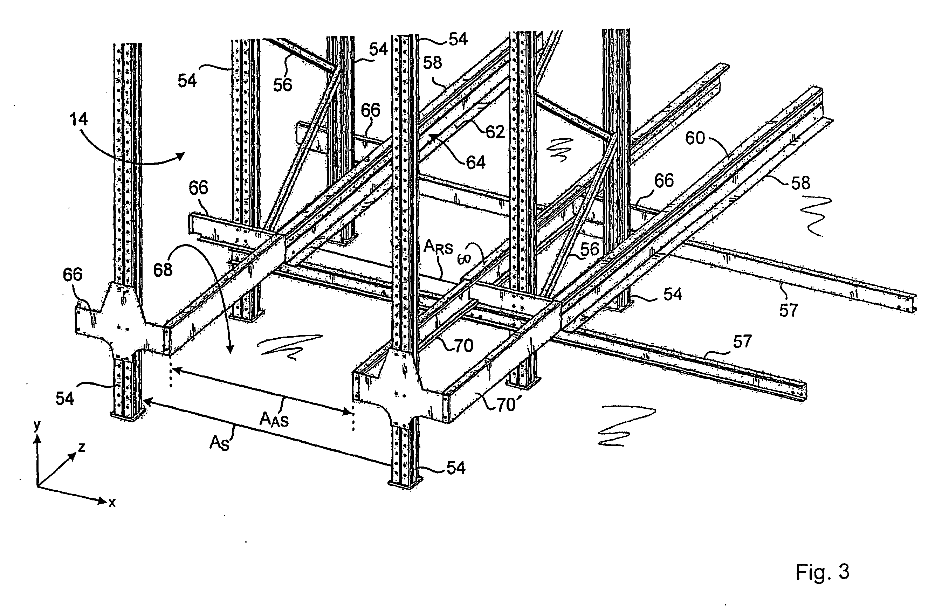

Die Paletten 16 werden innerhalb der Kanäle 14 mit Kanalfahrzeugen 22, den so genannten Shuttle 22, bewegt. Ein Shuttle 22 ist ein schienengeführtes Fahrzeug mit einer vertikal (Y) beweglichen Hubeinrichtung. Die Fahrschienen des Shuttles 22, die in der Fig. 1 nicht explizit gezeigt sind, sind am Regal 12 befestigt, so dass das Shuttle 22 mit abgesenkter Hubeinrichtung eine Palette 16 unterfahren kann, die Palette 16 mit der Hubeinrichtung anheben kann und die Palette 16 dann zur Lagerung in den Kanal 14 hinein oder zur Auslagerung an die Regalfront transportieren kann. Das Shuttle 22 ist mit einer geeigneten Sensorik versehen, um einen Abstand zu bereits eingelagerten Paletten 16 bzw. zu einem Kanalende zu bestimmen. Das Shuttle 22 wird üblicherweise mittels des Staplers 20 in einen vorbestimmten Kanal 14 des Regals 12 eingesetzt. Beim Einlagern einer Palette 16 in diesen vorbestimmten Kanal 14 wird die Palette 16 an einen Übergabeplatz verbracht, der unter Bezugnahme auf Fig. 3 noch genauer beschrieben werden wird. Von dort aus holt das Shuttle 22 die Palette 16 ab und lagert sie ein. Ein Auslagerungsvorgang erfolgt in umgekehrter Reihenfolge. Ist ein Kanal 14 voll oder leer, kann das Shuttle 22 umgesetzt werden. Das Shuttle 22 kann natürlich zu jedem beliebigen Zeitpunkt umgesetzt werden. Je nach Anforderung kann ein Kanal 14 komplett mit Paletten 16 gefüllt oder geleert werden. Dazu werden einzelne Paletten 16 eingelagert oder ausgelagert. Bei einer Anwendung als Durchlauflager wird von einer Regalfront aus eingelagert. Von einer gegenüberliegenden Regalfront, d.h. an einer Rückseite, wird ausgelagert. Beim Auslagern leer gewordene Lagerplätze werden mit bereits eingelagerten Paletten 16 durch Vorwärtsbewegung derselben mittels des Shuttles 22 nachgefüllt, so dass einlagerseitig Lagerplätze wieder frei werden.

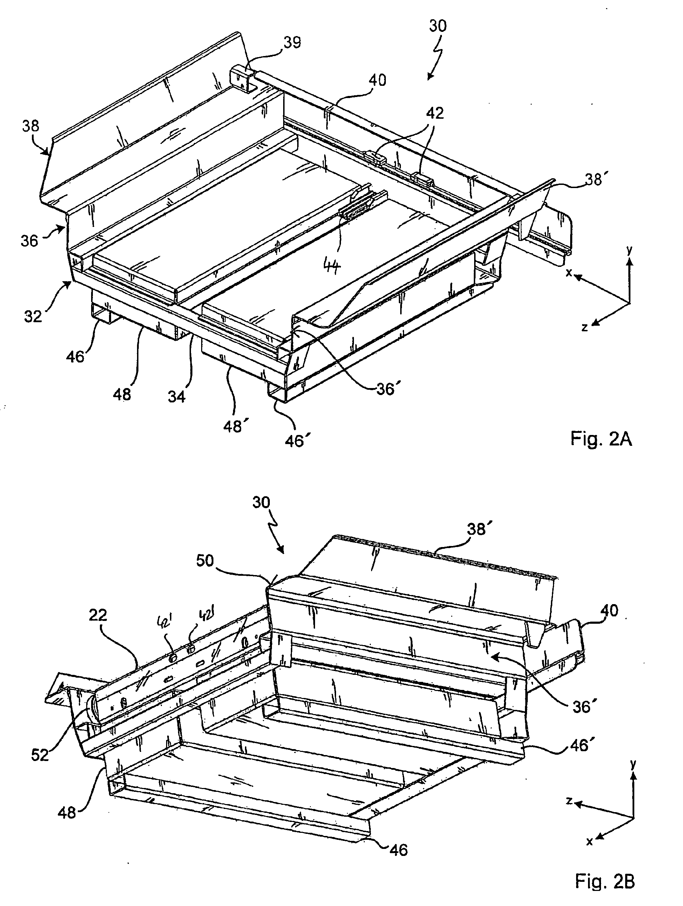

Fig. 2 a und 2b zeigen eine erste Ausführungsform eines Shuttle-Bahnhofs 30 gemäß der vorliegenden Erfindung in einer perspektivischen Ansicht. Fig. 2a zeigt eine perspektivische Draufsicht. Fig. 2b zeigt eine perspektivische Untersicht des Bahnhofs 30 der Fig. 2 a.

Der Shuttle-Bahnhof 30 weist einen Rahmen bzw. ein Gestell 32 auf. Das Gestell 32 weist in der Längsrichtung Z der Kanäle 14 (vgl. Fig. 1) orientierte Schienenabschnitte 36 bzw. 36' auf. Die Schienenabschnitte 36 sind im Beispiel der Fig. 2 aus einem Vierkantrohr, das als Laufschiene für Laufräder 52 des Shuttles 22 dient, und einer daran anschließenden Seitenwand gebildet, die im Wesentlichen in der YZ-Ebene orientiert ist. An die vertikale Seitenwand schließt eine im Beispiel der Fig. 2 Z-förmige Zentriereinrichtung 38, 38' an. Die Zentriereinrichtung 38, 38' kann Endanschläge 39, 39' aufweisen. Die Schienenabschnitte 36, 36' und die Komponenten der Zentriereinrichtung 38, 38' sind bodenseitig mittels Querstreben 34 verbunden, die im Wesentlichen in der X-Richtung verlaufen. Die Querstreben 34 sind in der Ansicht der Fig. 2b besonders gut zu erkennen.

Es versteht sich, dass das Gestell 32 aus einem oder mehreren Teilen gebildet sein kann. Insbesondere der Schienenabschnitt 36 und die Zentriereinrichtung 38 bzw. der Schienenabschnitt 36' und die Zentriereinrichtung 38' können jeweils einstückig ausgebildet sein, wobei z.B. ein Blech entsprechend gefalzt wird.

Die Zentriereinrichtung 38, 38' dient zur Zentrierung einer Palette 16 beim Absetzen durch den Stapler 20 auf dem Bahnhof 30. Dazu verjüngt sich der Querschnitt der Querzentriereinrichtung 38, 38' in der XY-Ebene von einer Kanaloberseite zu einer Kanalunterseite. Ein lichter Abstand von unteren Kanten der sich verjüngenden Seitenwände der Zentriereinrichtung 38, 38' entspricht vorzugsweise einer Breite der Paletten 16. Die Seitenwände dienen somit beim Absetzen der Palette 16 als trichterförmige Führung. Die Palette 16 sitzt in einem abgesenkten Zustand somit in X-Richtung in einer vordefinierten Lage, vorzugsweise mittig zum Kanal 14.

Das Gestell 32 umfasst des Weiteren eine Anschlageinrichtung 40. Die Anschlageinrichtung 40 kann in Form eines Blechs 40 realisiert sein, das in X-Richtung über eine Breite eines Kanals 14 vorsteht, um als mechanischer Anschlag beim Einsetzen des Bahnhofs 30 in die Regale 12 bzw. die Kanäle 14 zu dienen. Des Weiteren dient das Blech 40 als mechanischer Anschlag für die Shuttles 22, um zu verhindern, dass die Shuttles 22 aus einem Kanal 14 herausfallen können, wenn der Bahnhof 30 in den Kanal 14 integriert ist. Außerdem dient er als visuelle und physische Barriere für Bedienpersonal, um ein Eintreten in den Kanal 14 zu verhindern, während ein Shuttle 22 im Kanal 14 arbeitet. Diese Barriere dient auch als Schutz des Shuttles 22 vor Staplergabeln und dergleichen.

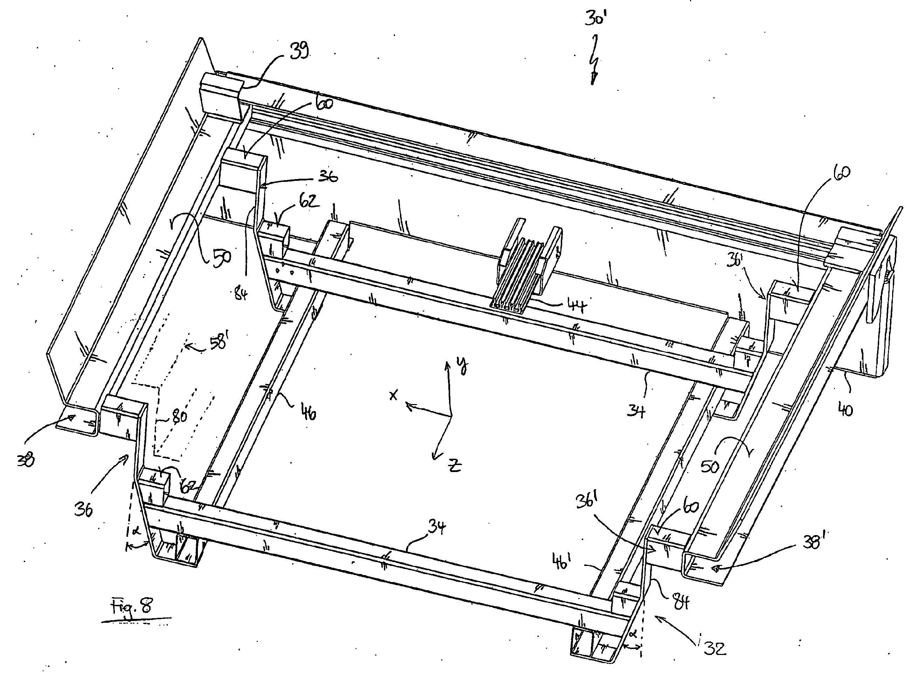

Der Bahnhof 30 kann optional eine oder mehrere Sensoreinrichtungen 42, wie z.B. Lichtschrankenelemente (Sender, Empfänger, Reflektoren, usw.), aufweisen, um eine Notaus-Funktion zu ermöglichen. Das Shuttle 22 verfügt dann über entsprechend angepasste Sensoreinheiten (vgl. 42' in Fig. 8), so dass zwischen dem Shuttle 22 und den Sensoreinrichtungen 42 z.B. eine Licht- oder Laserschranke errichtet werden kann. Diese Lichtschranken erstrecken sich im Wesentlichen in die Tiefe (Z-Richtung) eines Kanals 14. Bei einer bevorzugten Ausführungsform sind Lichtschranken nach vorn und nach hinten relativ zum Shuttle 22 vorgesehen. Damit ist möglich, auch Unterbrechungen des Strahlengangs innerhalb des Kanals 14 zu erfassen, um ggf. eine Notausschaltung hervorzurufen.

Wird der Strahlengang z.B. durch eine quer in den Kanal 14 eintretende Bedienperson unterbrochen, führt dies automatisch zu einem Notaus des Shuttles 212. Das Shuttle 22 kann dann nicht weiter verfahren werden. Personenschäden sind somit ausgeschlossen. Im Stand der Technik wird üblicherweise nur ein Kanaleingang bzw. - ausgang in Querrichtung (X) überwacht. Damit kann ein unbefugtes Betreten eines Kanals durch Personen nur registriert werden, wenn die Person auch tatsächlich über den Ein- oder Ausgang in den Kanal 14 eintritt. Ein seitliches Einsteigen kann nicht erfasst werden.

Es versteht sich, dass mehrere solcher Sensoreinheiten quer nebeneinander angeordnet werden können, um eine Art Strahlenteppich zu erzeugen. Insbesondere wird die Kanaltiefe über die gesamte Kanalbreite überwacht. In diesem Fall ist es sogar möglich, den Eintritt lediglich eines Beins einer Person in einem äußeren Randbereich an einer beliebigen Stelle im Kanal 14 zu registrieren.

Neben Licht- und Lasersensoren 42 lassen sich natürlich auch andere Sensortypen einsetzen, wie z.B. Infrarotsensoren, Ultraschallsensoren, Wärmesensoren, usw. Die eingesetzten Sensortypen sollten geeignet sein, einen unbefugten Eintritt einer Person zu detektieren, um einen Notaus veranlassen zu können. Vorzugsweise sind die Sensoren zu einer Überwachung der gesamten Kanaltiefe geeignet.

Wenn kein Bahnhof 30 in den Kanal 1 eingesetzt ist, kann eine Überwachung des Kanals in Längsrichtung (Z) erfolgen, indem die Sensoreinrichtungen an einem oder beiden Enden des Kanals mittels eines quer verlaufenden Arms (nicht dargestellt) am Regal 12 oder den Regalschienen 58 befestigt werden. Diese Arme werden so befestigt, dass vorzugsweise eine Überwachung in der Mitte der Breite des Kanals erfolgt. Die Arme können schwenkbar am Regal angelenkt sein, um sowohl mit Bahnhof 30 als auch ohne Bahnhof 30 arbeiten zu können. Vorzugsweise werden am Arm lediglich Reflektoren, wie z.B. Spiegel, angebracht.

Die Sensoren (insbesondere am Shuttle) haben dann einen entsprechenden Öffnungswinkel um eine Höhendifferenz zwischen Shuttle 22 und Sensoren 42 ausgleichen zu können, insbesondere wenn das Shuttle 22 im Kanal 14 verfahren wird. Der Öffnungswinkel kann aber sehr klein gewählt werden, wenn die Sensoren 42 am Bahnhof 30 angebracht werden.

Die Sensoreinheiten 42 können darüber hinaus auch zur Abstandsbestimmung zwischen dem Shuttle 22 und dem Bahnhof 30, d.h. dem Kanalende, verwendet werden.

Der Bahnhof 30 kann ferner einen Kopplungsmechanismus 44 aufweisen, um eine elektrische Verbindung mit dem Shuttle 22 herzustellen, wobei das Shuttle 22 dann ein entsprechendes Gegenstück aufweist. Mit Hilfe des Steckers 44 lässt sich das Shuttle 22 mit Energie versorgen, wenn das Shuttle 22 vollständig in den Bahnhof 30 eingefahren ist.

Eine derartige Situation ist in der Fig. 2b gezeigt. In der Fig. 2b ist ein Shuttle 22 vollständig in den Bahnhof 30 eingefahren. Die Länge des Bahnhofs ist so gewählt, dass das Shuttle 22 im eingefahrenen Zustand nicht über den Bahnhof 30 in Z-Richtung vorsteht.

Die Höhe der Seitenwände der Schienenabschnitte 36 bzw. 36' ist so gewählt, dass sie leicht höher als eine Höhe des Shuttles 22 ist. Die Seitenwände gehen in Abstelloberflächen 50 über. Die (Paletten-)Abstelloberflächen 50 sind Teil der hier Z-förmig ausgebildeten Zentriereinrichtung 38, 38'. Auf die Abstellflächen 50 werden die Paletten 16 abgestellt.

Ferner sind in Fig. 2b Absetzstreben 46, 46' gut zu erkennen. Die Absetzstreben 46, 46' verlaufen im Wesentlichen in Z-Richtung und sind angepasst, mit einem Lastaufnahmemittel, wie z.B. Gabeln, des Staplers 20 (vgl. Fig. 1) zusammenzuwirken.

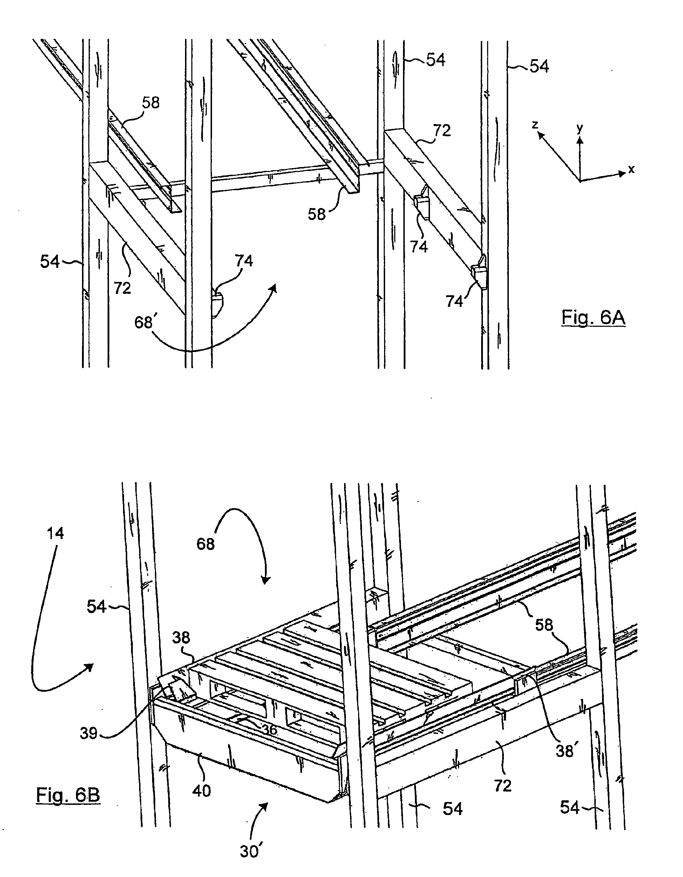

Ferner sind in den Fig. 2a und 2b Batteriefächer 48 gezeigt, die jedoch nur optional vorgesehen sind. In den Batteriefächern 48 können austauschbare Batterien gelagert werden, die die zum Aufladen des Shuttles 22 erforderliche Energie bereitstellen, wenn sich das Shuttle 22 im Bahnhof 30 aufhält. Sind die Kanäle 14 selbst elektrifiziert, so kann auf die Batterie verzichtet werden, wie es im Zusammenhang mit den Fig. 6a und 6b noch näher beschrieben werden wird.

Bezug nehmend auf Fig. 3 ist ein Kanal 14 isoliert gezeigt. Es versteht sich, dass der in Fig. 3 gezeigte Kanalaufbau für jeden der Kanäle 14 gilt und sich nach links und rechts und oben fortsetzen kann. Der in Fig. 3 gezeigte Kanal 14 ist in einer untersten Ebene, d.h. am Boden des Kanallagers 10, angeordnet.

Die Regale 12 weisen eine Vielzahl von vertikal (Y-Richtung) verlaufenden Regalstehern 54 auf. Die Regalsteher 54 können mit Verbindungsstreben 56 miteinander verbunden sein. Ein lichter Abstand As zwischen Regalstehern 54 beträgt bei der Verwendung von Paletten 16 mit Breiten von 1200 mm z.B. 1400 mm. Dies bedeutet, eine Breite des Kanals 14 beträgt 1400 mm, so dass bei einer mittig zur Kanalmitte eingelagerten Palette 16 links und rechts 100 mm Spiel bzw. Raum für einen Überhang von Artikeln 18 auf der Palette 16 bleiben. In der Längsrichtung (Z-Richtung) des Kanals 14 verlaufen seitlich an den Regalstehern 54 angebrachte Regalschienen 58. Die Regalschienen 58 weisen jeweils eine horizontal verlaufende Abstellfläche 60 auf, auf der die Paletten 16 abgestellt werden können. Die Regalschienen 58 weisen ferner eine horizontal verlaufende Lauffläche 62 für Laufräder 52 (vgl. Fig. 2b) der Shuttle 22 auf. Die Laufflächen 62 sind über im Wesentlichen vertikal verlaufende Seitenwände 64 mit den Abstellflächen 60 verbunden. Ein lichter Abstand zwischen den Seitenflächen 64 ist mit A_{RS} bezeichnet und beträgt z.B. 1000 mm. Die Breite der Shuttle 22 beträgt dann vorzugsweise 950 mm, so dass ein seitliches Spiel von ± 25 mm in einer Fahrebene des Shuttles 22 vorhanden ist.

Die Regalschienen 58 sind mittels in Querrichtung X an den Regalstehern 54 befestigten Halteelementen 66 montiert.

Die Regalschienen 58 enden regaleingangsseitig einen Lagerplatz vor der eigentlichen Regalfront. Der eingangsseitig erste Lagerplatz wird nachfolgend als Übergabeplatz 68 bezeichnet. Der Übergabeplatz 68 weist anstelle der Regalschienen 58 Aufnahmeschienen 70 auf. Die Aufnahmeschienen 70 sind angepasst, einen Bahnhof 30 durch Einheben und/oder Einschieben aufzunehmen. Ein lichter Abstand A_{AS} der Aufnahmeschienen 70 ist größer als der lichte Abstand A_{RS} der Regalschienen 58. Der Abstand der Aufnahmeschienen 70 ist vorzugsweise um die Materialstärken der Regalschienen 58 größer.

Die Aufnahmeschienen 70 sind vorzugsweise derart ausgebildet, dass die Regalschienen 58 auf diese geschoben werden können. Deshalb kann die Länge der Aufnahmeschienen 70 länger als ein Lagerplatz sein, wie es exemplarisch anhand einer Aufnahmeschiene 70' in Fig. 3 gezeigt ist, die eine linke Aufnahmeschiene eines rechts zum Übergabeplatz 68 angeordneten weiteren Übergabeplatzes darstellt. Die Regalschienen 58 können des Weiteren auf Querträgern 57 aufliegen, um die hohen Belastungskräfte aufzunehmen, wenn die Kanäle 14 mit Paletten 16 beladen sind.

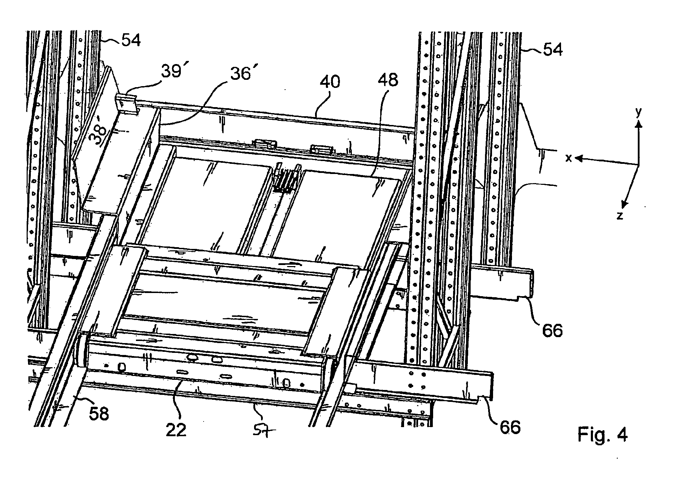

Fig. 4 zeigt den Übergabeplatz 68 der Fig. 3 aus der Perspektive des Kanalinneren. In den Übergabeplatz 68 ist der Bahnhof 30 der Fig. 2a und 2b eingehoben und/oder eingeschoben worden. Es versteht sich, dass der Bahnhof 30 auch auf andere Weise eingangsseitig an den Kanal 14 gekoppelt werden kann. Der Bahnhof 30 könnte auch über den Kanal 14 hinausragen, würde dann jedoch wahrscheinlich den Betrieb des Staplers 20 stören.

Die Abmessung und Anordnung der Schienenabschnitte 36, 36' des Gestells 32 des Bahnhofs 30 sind derart gewählt, dass die Schienenabschnitte 36, 36' bündig an die Regalschienen 58 des Kanals 14 koppeln. Auf diese Weise ist gewährleistet, dass ein im Bahnhof 30 befindliches Shuttle 22 problemlos aus dem Bahnhof 30 in den Kanal 14 einfahren kann. Ein aufwändiges, kompliziertes Einsetzen des Shuttles 22 in den Kanal 14 bzw. die Regalschienen 58 entfällt vollkommen.

Ferner ist in Fig. 4 zu erkennen, dass die Zentriereinrichtung 38, 38' an den in dem Kanal 14 zur Verfügung stehenden Raum angepasst ist.

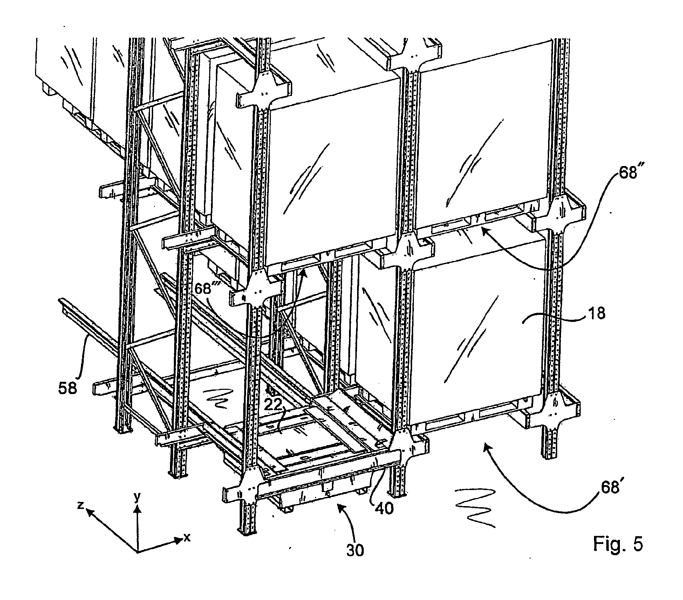

Bezug nehmend auf Fig. 5 ist der in den Übergabeplatz 68 der Fig.4 eingebaute Bahnhof 30 von außerhalb des Regals 12 perspektivisch gezeigt. Der Bahnhof 30 schließt bündig mit einer Regalfront ab. Das Shuttle 22 befindet sich in der Fig. 5 im Bahnhof 30.

Wenn kein Bahnhof 30 in den Kanal 14 eingesetzt ist, kann der Übergabeplatz 68 als konventioneller Lagerplatz genutzt werden. Dies ist exemplarisch bei benachbarten Übergabeplätzen 68', 68" und 68'" gezeigt.

Fig. 6a und 6b zeigen eine zweite Ausführungsform eines Übergabeplatzes 68 bzw. eines Bahnhofs 30', bei der die Energieversorgung für das Shuttle 22 mittels eines elektrifizierten Kanals 14 erfolgt.

In Fig. 6a ist eine weitere Ausführungsform eines Übergabeplatzes 68 gezeigt. Der Übergabeplatz 68 der Fig. 6a weist in Längsrichtung Z des Kanals 14 verlaufende Aufnahmebalken 72 zwischen den Regalstehern 54 auf. Der Übergabeplatz 68 der Fig. 6a weist ferner Stützelemente 74 auf, die angepasst sind, mit entsprechenden Elementen des Bahnhofs 30' zu verrasten, wenn der Bahnhof 30' von oben in den Übergabeplatz 68 eingehoben wird. Es versteht sich, dass der Bahnhof 30' ansonsten unverändert bleibt, insbesondere was den bündigen Anschluss der Schienenabschnitte an die Regalschienen 58 betrifft. Im Endbereich der Regalschienen 58 können Steckerelemente zur elektrischen Verbindung mit dem Bahnhof 30' vorgesehen sein, die in den Fig. 6a und 6b jedoch nicht dargestellt sind.

In Fig. 6b ist der Bahnhof 30' in den Übergabeplatz 68 der Fig. 6a eingehoben. Man erkennt, dass die Batteriefächer 48 nicht mehr vorhanden sind, da die Energiezufuhr mittels des elektrifizierten Kanals 14 erfolgt.

Ferner ist in Fig. 6b eine leere Palette 16 gezeigt, die mittels der Querzentriereinrichtung 38, 38' mittig zur Mitte des Kanals 14 ausgerichtet ist. Die Endanschläge 39 sind in Form von Winkelblechen realisiert, die ein Herausziehen der Palette 16 aus dem Kanal 14 über eine Regalfront hinaus verhindern.

Die Anschlageinrichtung 40' ist im Vergleich zu der Anschlageinrichtung 40 der Fig. 2a und 2b kürzer, da der Bahnhof 30' nur eingehoben, aber nicht eingeschoben wird.

Es versteht sich, dass die Steuerung der Shuttles 22 in den Kanälen 14 mittels einer Steuereinrichtung erfolgen kann. Die Kommunikation zwischen den Shuttle 22 und der Steuereinrichtung erfolgt vorzugsweise drahtlos, wie es in Fig. 2 mittels Doppelpfeilen 24 angedeutet ist. Die Steuereinrichtung kann optional am Stapler 20 befestigt sein. Sie kann aber auch Teil eines übergeordneten Lagerverwaltungsrechners sein.

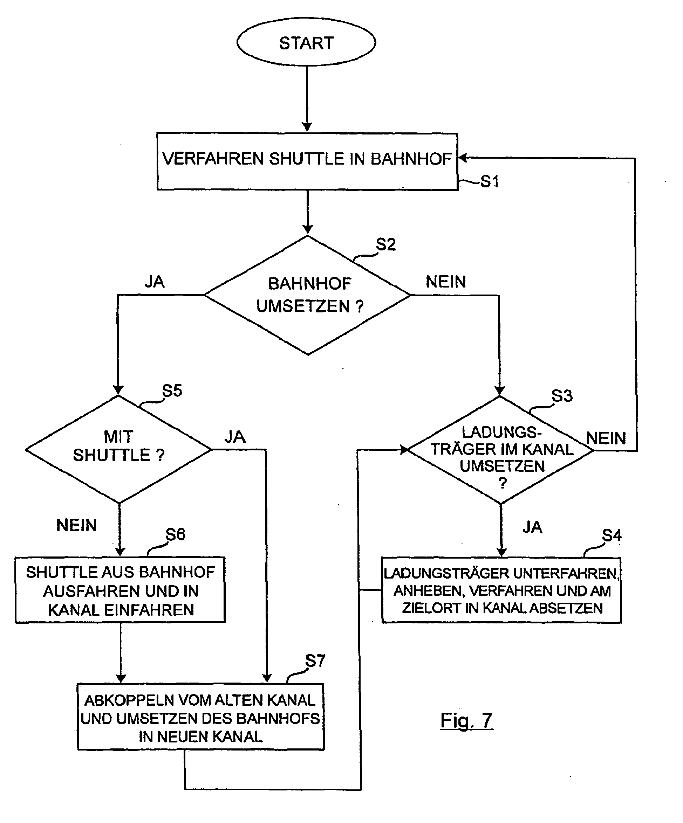

Bezug nehmend auf Fig. 7 ist ein Flussdiagramm für ein Verfahren zum Bereitstellen des Shuttles 20 in verschiedenen Kanälen 14 des Kanallagers 10 gezeigt. In einem ersten Schritt S1 wird ein Shuttle 20 in einen Shuttle-Bahnhof 30 verfahren. In einem Schritt S2 wird der Bahnhof 30 von einem Übergabeplatz 68 eines ersten Kanals 14 im Regal 12 abgekoppelt, und zwar vorzugsweise durch Ausheben und/oder Herausziehen des Bahnhofs 30 mittels eines Regalbediengeräts oder eines Staplers 20. In einem Schritt S3 wird der mit dem Shuttle 22 bestückte Bahnhof 30 mit dem Regalbediengerät oder dem Stapler 20 (Regalförderzeug) in einen anderen Übergabeplatz 68 eines anderen Kanals 14 umgesetzt bzw. eingesetzt.

Fig. 8 zeigt eine perspektivische Ansicht einer weiteren Ausführungsform eines erfindungsgemäßen Bahnhofs 30'.

Der Bahnhof 30' ist im Wesentlichen gleich wie der Bahnhof 30 aufgebaut. Der Bahnhof 30' unterscheidet sich vom Bahnhof 30 durch die Ausgestaltung der Schienenabschnitte 36, 36'.

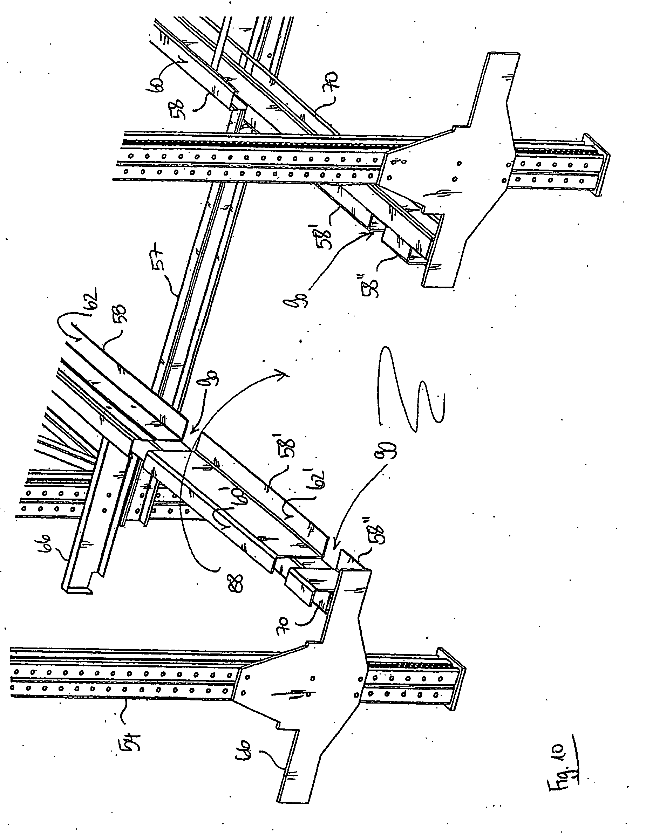

Die Schienenabschnitte 36, 36' sind nicht mehr durchgehend, wie z.B. bei der Ausführungsform gemäß Fig. 2a. Die Schienenabschnitte 36, 36' der Fig. 8 stellen nur noch Bruchteile dar, wobei eine innere Kontur 80 der Schienenabschnitte 36, 36', die in Fig. 8 mit einer Strichlinie dargestellt ist, einer inneren Kontur der Regalschienen 58 im Wesentlichen entspricht. In der Fig. 8 ist eine Regalschiene 58' durch eine punktierte Linie angedeutet (vergleiche auch Fig. 10). Die Länge der Schienenabschnitte 36, 36' ist in Z-Richtung stark verkürzt. Sowohl auf der linken Seite als auch auf der rechten Seite des Gestells sind jeweils zwei Schienenabschnitte 36 bzw. 36' vorgesehen. Aus Stabilitätsgründen sind die Schienenabschnitte 36, 36' sich gegenüberliegende angeordnet und mit den Querstreben 34 verbunden. Die Querstreben 34 sind wiederum mit den Streben 46, 46' der Absetzeinrichtung verbunden.

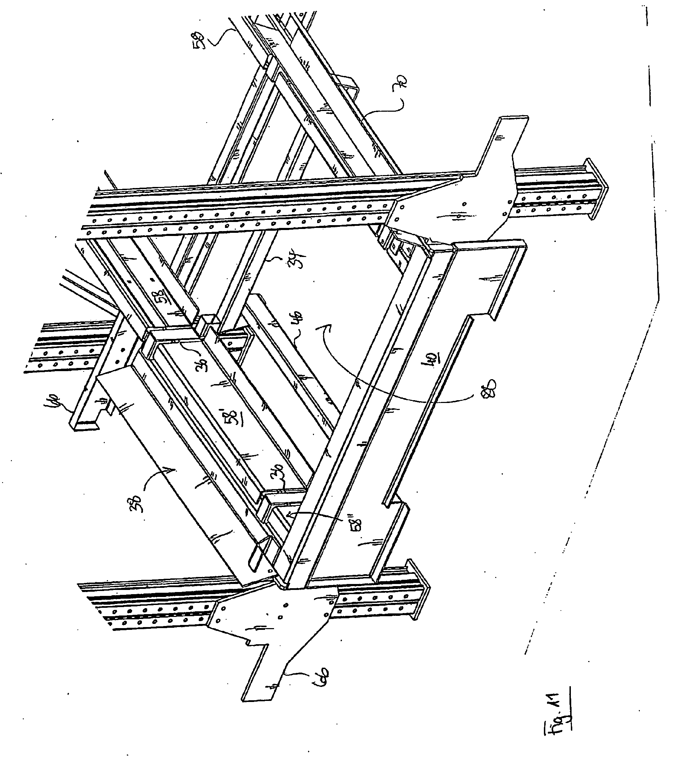

Die Schienenabschnitte 36, 36' sind hier mehrteilig aufgebaut. Für solche Elemente, die die Abstellflächen 60 für die Ladungsträger bereitstellen und die die Laufflächen 62 für die Laufräder 52 des Shuttles 22 bereitstellen, werden hier Vierkantrohre eingesetzt. Die Vierkantrohre sind hier an Verbindungseisen 84 angeschweißt. Die Verbindungseisen 84 ermöglichen ferner eine Verbindung zwischen den Schienenabschnitten 36, 36' und den Querstreben 34 bzw. den Absetzstreben 46, 46' Die Verbindungseisen 84 sind jeweils in ihren unteren Abschnitten mit einem Winkel α gegenüber ihren oberen Abschnitten abgewinkelt. Diese Abwinklung erleichtert ein Einheben des Bahnhofs 30' in einen entsprechend angepassten Kanal 14 (vergleiche Fig. 11). Der Bahnhof 30' verjüngt sich in diesem Sinne trichterförmig nach unten, so dass ein Einsetzen bzw. ein Heben in Regalschienen 58' (vergleiche Fig. 10) einfach zu bewerkstelligen ist. Die abgewinkelten, unteren Teile der Verbindungseisen 84 führen den Bahnhof 30' beim Einheben.

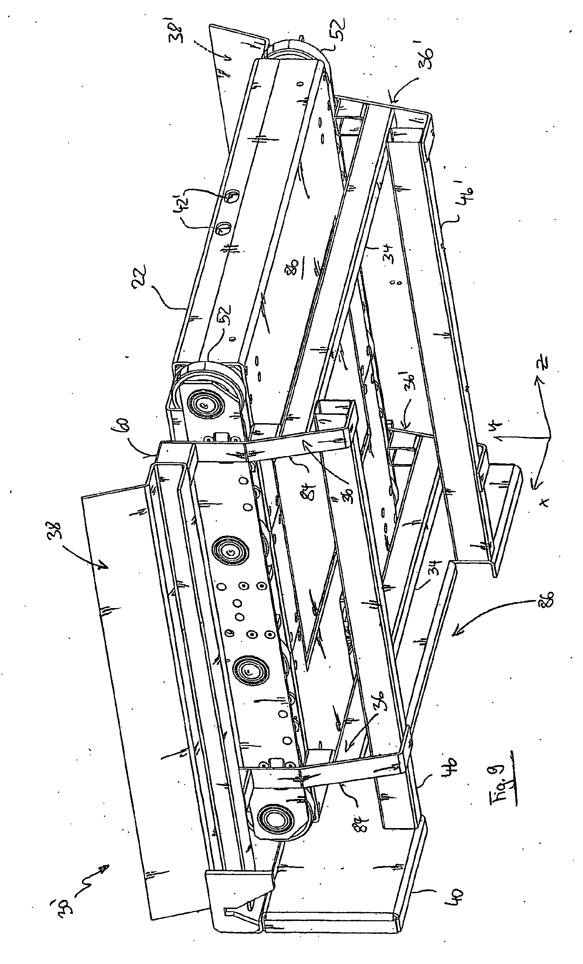

Fig. 9 zeigt den Bahnhof 30' der Fig. 8 in einer perspektivischen Untersicht, wobei ein Shuttle 22 im Bahnhof 30' geparkt ist.

Das Shuttle 22 sitzt mit seiner Unterseite 86 auf den Laufflächen 62 der Schienenabschnitte 36, 36'.

Der Bahnhof 30' ist in einer ausgehobenen Stellung gezeigt, wobei die Gabeln des Staplers 20, die normalerweise durch eine Öffnung 86 des Anschlagsblechs 40 entlang der Absetzeinrichtung 46, 46' unter den Bahnhof 30' eingeführt wird, nicht dargestellt sind. Wenn der Bahnhof 30' in einen Kanal 14 eingehoben wird, erfolgt eine Führung durch die abgewinkelten Elemente der Verbindungseisen 84 entlang den Aufnahmeschienen 70, wie es nachfolgend im Zusammenhang mit den Fig. 10 und 11 noch näher beschrieben werden wird.

In Fig. 9 sind auch die Sensoreinrichtungen 42' des Shuttles 22 dargestellt, die einen Strahlengang in Richtung der Tiefe des Kanals 14 (Z-Richtung) ermöglichen.

Fig. 10 zeigt eine weitere Ausgestaltung eines Übergabeplatzes 88, der zur Aufnahme des Bahnhofs 30' geeignet ist, und ähnlich dem Übergabeplatz 68 der Fig. 3 ausgebildet ist.

Der Übergabeplatz 88 weist zusätzlich zu den Aufnahmeschienen 70 fragmentale Regalschienen 58' bzw. 58" mit Abstellflächen 60' und Laufflächen 62' auf. Die Regalschienen 58' und 58" sind so an den Aufnahmeschienen 70 montiert, dass sie eine Fortsetzung der Regalschiene 58 darstellen. Diese Fortsetzung ist durch Lücken 90 unterbrochen. Die Lücken 90 dienen zur Aufnahme der Schienenabschnitte 36, 36' des Shuttles 22.

In Fig. 11 ist der Bahnhof 30' der Fig. 8 und 9 in den Übergabeplatz 88 der Fig. 10 eingehoben. Man erkennt, dass die Schienenabschnitte 36 und die Regalschienenfragmente 58' und 58" im Wesentlichen eine nahtlose Fortsetzung der Regalschiene 58 darstellen. Es versteht sich, dass zwischen den Regalschienen und den Schienenabschnitten kleinere Lücken vorhanden sind. Diese Lücken werden als Spiel beim Einheben des Bahnhofs 30' in den Übergabeplatz 88 benötigt.

Der in den Fig. 8 bis 11 gezeigte Bahnhof 30' wird vorzugsweise an einem gegenüberliegenden Kanalende eingesetzt, wenn am anderen Ende der Bahnhof 30 eingesetzt ist. Der Bahnhof 30' kann auch im Regal 12 verbleiben, um eine Herausfallen des Shuttles 22 jederzeit zu verhindern. Es versteht sich, dass der Bahnhof 30' zur permanenten Lagerung eines Ladungsträgers 18 geeignet ist und somit einen regulären Lagerplatz im Kanal 14 darstellt.

## Patentansprüche

1. Shuttle-Bahnhof (30; 30') für Shuttle (22) in einem Shuttle-Kanallager (10), welches zumindest ein Regal (12) mit einer Vielzahl von in einer Längsrichtung (Z) verlaufenden Kanälen (14), die durch Regalschienen (58) gebildet werden, aufweist, wobei der Bahnhof (30; 30') ein Gestell (32) aufweist, welches Schienenabschnitte (36, 36') mit vertikalen Seitenwänden aufweist, wobei das Gestell (32) derart in ein Ende eines Kanals (14) einsetzbar ist, dass die Schienenabschnitte (36, 36') des Gestells (32) im Wesentlichen bündig an die Regalschienen (58) des Kanals (14) koppeln, so dass das Shuttle (22) in die Regalschienen (58) des Kanals (14) ein- und ausfahren kann, um Ladungsträger (16) anzuheben, umzusetzen und/oder abzusetzen **dadurch gekennzeichnet, dass** das Gestell (32) so dimensioniert ist, dass das Shuttle (22) während eines Umsetzens des Bahnhofs (30) von dem Ende des einen Kanals (14) zu einem Ende eines anderen Kanals (14) im Gestell (32) verbleiben kann und das Regal nicht berührt, wobei das einsetzbare Gestell (32) ferner eine Querzentriereinrichtung (38, 38') aufweist, die an die vertikalen Seitenwände anschließt, die horizontal orientierte Abstellflächen (50) aufweist und die sich von einer Kanaloberseite zu einer Kanalunterseite hin derart trichterförmig verjüngt, dass ein auf den Abstellflächen (50) positionierter Ladungsträger (16) in Querrichtung (X) des Kanals (14) zentriert ist, wobei das Gestell ferner einen Endanschlag (39) aufweist, der so angeordnet ist, dass ein auf dem Gestell (32) positionierter Ladungsträger (16) nicht aus dem Kanal (14) gezogen werden kann.

2. Bahnhof nach Anspruch 1, wobei sich die Schienenabschnitte (36, 36') im Wesentlichen in der Längsrichtung (Z) erstrecken und in Querrichtung (X) einen lichten Abstand zwischen sich aufweisen, der im Wesentlichen einem lichten Abstand (A_{RS}) zwischen den Regalschienen (58) eines Kanals (14) entspricht.

3. Bahnhof nach einem der vorhergehenden Ansprüche, wobei das Gestell (32) auf seiner dem Kanalende abgewandten Seite mittels einer Anschlageinrichtung (40), die vorzugsweise gegenüber einer Kanalbreite, vorzugsweise beidseitig, vorsteht, abgeschlossen ist.

4. Bahnhof nach einem der vorhergehenden Ansprüche, wobei der Bahnhof (30) an seiner Unterseite eine Absetzeinrichtung (46, 46') aufweist, die angepasst ist, bei einem Umsetzen des Bahnhofs (30) von einem Ende eines ersten Kanals (14) zu einem Ende eines zweiten Kanals (14) mit einem Lastaufnahmemittel eine Regalförderzeugs (20) derart zusammenzuwirken, dass der Bahnhof (30) aus dem ersten Kanal (14) angehoben und in den zweiten Kanal (14) abgesenkt werden kann.

5. Bahnhof nach einem der vorhergehenden Ansprüche, der einen Energieanschluss zum elektrischen Verbinden mit einem elektrifizierten Kanal (14) oder der einen austauschbaren Energiespeicher (48) aufweist, um das Shuttle (22), wenn es sich im Bahnhof (30; 30') befindet, mit Energie zu versorgen, so dass sich das Shuttle (22) im Kanal (14) autonom bewegen kann.

6. Bahnhof nach einem der vorhergehenden Ansprüche, der ferner eine in Längsrichtung (Z) wirkende Sensoreinrichtung (42) aufweist.

7. Bahnhof nach einem der vorhergehenden Anspruche, wobei jeder Schienenabschnitt (36, 36') eine Kontur aufweist, die zumindest in einem Bereich, der einem Kanalinneren zugewandt ist, im Wesentlichen mit einer dem Kanalinneren zugewandten Kontur der entsprechenden Regalschiene (36, 36') übereinstimmt.

8. Shuttle-Kanallager mit einem Shuttle-Bahnhof (30) nach einem der Ansprüche 1 bis 7 und einem Regal (12).

## Claims

1. Shuttle station (30; 30') for shuttles (22) in a shuttle-channel warehouse (10), which comprises at least one rack (12) having a plurality of channels (14), which are extending in a longitudinal direction (Z) and are formed by rack tracks (58), wherein the station (30; 30') comprises a frame (32), which has track sections (36, 36') including vertical side walls, wherein the frame (32) is insertable into an end of one of the channels (14) such that the track sections (36, 36') of the frame (32) are flush-coupled to the rack tracks (58) of the channel (14) so that the shuttle (22) can enter and leave the track racks (58) of the channel (14), in order to lift, transfer and/or deposit load carriers (16), **characterized in that** the frame (32) is dimensioned such that the shuttle (22) can remain in the frame (32), during the transfer of the station (30) from the end of the one of the channels (14) to an end of another channel (14), and is not in contact to the rack, wherein the insertable frame (32) further comprises a transversal-centering device (38, 38') being arranged adjacent to the vertical side walls, which comprises a horizontally orientated deposit surface (50) and which tappers hopper-like from a channel top side to a channel bottom side such that a load carrier (16), which is positioned on the deposit surfaces (50), is centered in a transversal direction (X) of the channel (14), wherein the frame further comprises an end stop (39), which is arranged such that a load carrier (16), which is positioned on the frame (32), cannot be pulled from the channel (14).

2. The station of claim 1, wherein the rail sections (36, 36') substantially extend in the longitudinal direction (Z) and comprise in the transversal direction (X) a light distance therebetween, which corresponds substantially to a light distance (A_{RS}) between the rack tracks (58) of one of the channels (14).

3. The station of one of the preceding claims, wherein the frame (32) ends, at a side thereof facing away from the channel end, by means of a stopping device (40), which preferably protrudes a channel width, preferably on both sides.

4. The station of one of the preceding claims, wherein the station (30) comprises a depositing device (46, 46') at a bottom side thereof, which is adapted to cooperate, during a transfer of the station (30) from one end of a first channel (14) to an end of a second channel (14), with a load handling device of a storage and retrieval device (20) such that the station (30) can be lifted from the channel (14) and can be lowered into the second channel (14).

5. The station of one of the preceding claims, which comprises an energy terminal for electrically connecting to an electrified channel (14) or which comprises an exchangeable energy storage (48) for supplying the shuttle (22) with energy, when the shuttle is not located in the station (30; 30'), so that the shuttle (22) can move autonomously in the channel (14).

6. The station of one of the preceding claims, which further comprises a sensor device (42) which acts in the longitudinal direction (Z).

7. The station of one of the preceding claims, wherein each of the track sections (36, 36') has a contour which substantially corresponds to a contour of the corresponding rack track (36, 36'), which faces an interior of the channel, at least in a region which faces the interior of the channel.

8. Shuttle-channel warehouse having a shuttle station (30) of one of the claims 1 to 7, and a rack (12).

## Revendications

1. Station pour navettes (30 ; 30') pour des navettes (22) dans un entrepôt en canaux (10) à navettes, qui présente au moins un rayonnage (12) avec une pluralité de canaux (14) s'étendant dans une direction longitudinale (Z), lesquels sont formés par des rails de rayonnage (58), la station (30 ; 30') présentant un bâti (32), qui présente des portions de rails (36, 36') avec des parois latérales verticales, le bâti (32) pouvant être inséré dans une extrémité d'un canal (14) de telle sorte que les portions de rails (36, 36') du bâti (32) s'accouplent essentiellement en affleurement avec les rails de rayonnage (58) du canal (14), de telle sorte que la navette (22) puisse entrer et sortir dans les rails de rayonnage (58) du canal (14), afin de soulever des supports de charge (16), de les transférer et/ou de les déposer, **caractérisée en ce que** le bâti (32) est dimensionné de telle sorte que la navette (22) pendant un transfert de la station (30) depuis l'extrémité d'un canal (14) jusqu'à une extrémité d'un autre canal (14) puisse rester dans le bâti (32) et ne vienne pas en contact avec le rayonnage, le bâti insérable (32) présentant en outre un dispositif de centrage transversal (38, 38') qui se raccorde aux parois latérales verticales, qui présente des surfaces de pose (50) orientées horizontalement, et qui se rétrécit en forme d'entonnoir depuis un côté supérieur de canal jusqu'à un côté inférieur de canal de telle sorte qu'un support de charge (16) positionné sur les surfaces de pose (50) soit centré dans la direction transversale (X) du canal (14), le bâti présentant en outre une butée de fin de course (39) qui est disposée de telle sorte qu'un support de charge (16) positionné sur le bâti (32) ne puisse pas être retiré du canal (14).

2. Station selon la revendication 1, dans laquelle les portions de rails (36, 36') s'étendent essentiellement dans la direction longitudinale (Z) et présentent dans la direction transversale (X) un espacement intérieur entre elles qui correspond essentiellement à un espacement intérieur (A_{RS}) entre les rails de rayonnage (58) d'un canal (14).

3. Station selon l'une quelconque des revendications précédentes, dans laquelle le bâti (32) est fermé sur son côté opposé à l'extrémité de canal, au moyen d'un dispositif de butée (40) qui fait saillie, de préférence des deux côtés, de préférence par rapport à une largeur de canal.

4. Station selon l'une quelconque des revendications précédentes, dans laquelle la station (30) présente sur son côté inférieur un dispositif de dépose (46, 46') qui est prévu, lors d'un transfert de la station (30) d'une extrémité d'un premier canal (14) à une extrémité d'un deuxième canal (14), pour coopérer avec un moyen de réception de charge d'un chariot de manutention pour rayonnages (20), de telle sorte que la station (30) puisse être soulevée du premier canal (14) et être abaissée dans le deuxième canal (14).

5. Station selon l'une quelconque des revendications précédentes, qui présente une alimentation en énergie pour la connexion électrique à un canal électrifié (14) ou qui présente un accumulateur d'énergie interchangeable (48) afin d'alimenter en puissance la navette (22) lorsqu'elle se trouve dans la station (30 ; 30'), de telle sorte que la navette (22) puisse se déplacer de manière autonome dans le canal (14).

6. Station selon l'une quelconque des revendications précédentes, qui présente en outre un dispositif de capteur (42) agissant dans la direction longitudinale (Z).

7. Station selon l'une quelconque des revendications précédentes, dans laquelle chaque portion de rail (36, 36') présente un contour qui, au moins dans une région qui est tournée vers l'intérieur d'un canal, coïncide essentiellement avec un contour du rail de rayonnage correspondant (36, 36') tourné vers l'intérieur du canal.

8. Entrepôt en canaux à navettes, comprenant une station pour navettes (30) selon l'une quelconque des revendications 1 à 7 et un rayonnage (12).
